(19) Europäisches Patentamt European Patent Office Office européen des brevets

(11) **EP 4 660 679 A1**

(12) **EUROPEAN PATENT APPLICATION**

(43) Date of publication:
**10.12.2025  Bulletin 2025/50**

(21) Application number: **25179722.1**

(22) Date of filing: **29.05.2025**

(51) International Patent Classification (IPC):
*G02B 6/44* *(2006.01)*

(52) Cooperative Patent Classification (CPC):
**G02B 6/4433;** G02B 6/441

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.06.2024  IT 202400012862**

(71) Applicant: **Prysmian S.p.A.**
**20126 Milano (IT)**

(72) Inventors:
• **LAVENNE, Alain**
**89100 Paron (FR)**
• **PROVOST, Lionel**
**89100 Paron (FR)**
• **TESTU, Jean-Marc**
**89100 Paron (FR)**

(74) Representative: **Cevini, Gaia et al**
**Marchi & Partners S.r.l.**
**Via Vittor Pisani, 13**
**20124 Milano (IT)**

(54) **OPTICAL FIBER DROP CABLE**

(57)    It is disclosed a drop cable (1) comprising an optical fiber module (2) comprising one or more optical fibers (21) surrounded by a buffering membrane (22), a strength elements layer (3) surrounding the optical fiber module (2), the strength elements layer (3) comprising strength yarns surrounding the optical fiber module (2), an outer sheath (5) forming an inner cavity (6) in which the optical fiber module (2) and strength elements layer (3) are arranged, and at least two strength members (41, 42, 43, 44) totally embedded in the outer sheath (5) at opposite positions with respect to the inner cavity (6).

Fig. 1

EP 4 660 679 A1

**Description**

**Technical field**

The present invention relates to the field of optical fiber cables. In particular, the present invention relates to an optical fiber drop cable suitable for terrestrial networks, in particular - but not exclusively - optical access networks such as FTTH (Fiber To The Home) networks and FTTP (Fiber To The Premises) networks.

**Background art**

As known, optical fiber drop cables connect the main distribution network to individual premises, providing high-speed services, such as internet, television, and telephone services, directly to user's premises or home. Drop cables can be installed underground or aerially, depending on the infrastructure of the considered area.

Typically, optical fiber drop cables may be deployed in a number of very different ways, depending on the environment. The type of deployment may be aerial, façade, duct and direct-buried. Moreover, different installation techniques can be typically used, such as blowing, pushing or pulling.

Examples of state-of-the-art drop cables are disclosed herein after.

US 8,355,613 B2 discloses an optical fiber cable designed for drop cable applications that has a compact profile and is suitable for both the indoor and outdoor portions of the installation. The design has three functional units, an optical fiber subunit, and two strength members arranged side-by-side on either side of the optical fiber. The overall cable cross section is round. In a preferred embodiment, the optical fiber module of the cable has a coupled fiber design.

US 11,789,228 B2 discloses an optical fiber drop cable including a cable jacket having an outer surface defining the outermost surface of the optical fiber drop cable. The optical fiber drop cable also includes a subunit, a first strength element, and a second strength element. The first strength element, the second strength element, and the subunit are embedded in the cable jacket, and the first strength element, the second strength element, and the subunit are arranged substantially parallel to each other on a first plane. The subunit includes a buffer tube having an inner surface and an outer surface, at least one optical fiber, and a plurality of strengthening yarns. The plurality of strengthening yarns are disposed between the inner surface of the buffer tube and the at least one optical fiber, and the outer surface of the buffer tube is at least partially in contact with the cable jacket.

**Summary of the invention**

The inventors noticed that state-of-the-art optical fiber drop cables are designed in a number of different ways depending on the specific environment in which the cable has to be deployed and on the specific method of installation which is used. Many specific designs have been developed, each of them fitting with a specific deployment and/or a specific method of installation of the cable.

For instance, for buried-type installations, state-of-the-art designs typically provide for incorporating metallic components in the cable (such as a metallic armor) for protection purposes. However, these components are normally used for buried-type installations and not for other types of installations such as aerial installations.

In view of the above, the Applicant has tackled the problem of providing an optical fiber drop cable (also referred to as, simply, "drop cable") suitable for being deployed in different environments and installed according to different installation methods without any specific adaptation. In other words, the Applicant has tackled the problem of providing an optical fiber drop cable which is suitable for multiple uses and installation techniques.

The Applicant found that the technical problem above may be solved by an optical fiber drop cable comprising:

-    an optical fiber module comprising one or more optical fibers surrounded by a buffering membrane;
-    a layer of strength yarns surrounding the optical fiber module;
-    an outer sheath forming an inner cavity where the optical fiber module and the layer of strength yarns are arranged; and
-    at least two strength members completely embedded in the outer sheath in opposite positions with respect to the inner cavity.

The inventors conducted a number of tests on drop cables having the aforementioned structure and found that drop cables having improved performances may be identified by means of certain properties of the drop cable which are expressed in terms of one or more conditions to be met by a set of parameters associated with the drop cable.

The set of parameters mentioned above have been identified by the inventors and comprise:

-    a ratio OD/ID between an outer dimension, OD, and an inner dimension, ID, of the outer sheath;

- a ratio ST/OD between a stiffness of the cable and the outer dimension, OD, also indicated as "stiffness-over-dimension" or SD coefficient;
- a ratio W/ST between a weight of the cable, W, and the stiffness, ST, also indicated as "weight-over-stiffness" or WS coefficient; and
- a cross-sectional ratio CSR, which is defined as $A_{sm}/(\pi/4\cdot(OD^2-ID^2))$, where $A_{sm}$ is the cross-sectional area of the strength members embedded into the outer sheath. For round strength members, $A_{sm}$ is defined by $A_{sm} = n\cdot\pi/4\cdot D^2$, where n is the number of strength members, and D is the diameter of one strength member.

According to embodiments of the present invention, improved performances may be achieved by drop cables wherein the ratio between the outer dimension and the inner dimension is greater than or equal to two. Further improved performances may be achieved by drop cables meeting the following conditions:

$$20\ \text{N·m} \leq \text{ST/OD} - A\cdot OD \leq 60\ \text{N·m};$$

$$15\ \text{g/(N·m}^3) \leq \text{W/ST} - B\cdot OD \leq 75\ \text{g/(N·m}^3);$$

$$0.3562 \leq \text{CSR} - C\cdot OD \leq 0.4612.$$

where OD is the outer dimension, ID is the inner dimension, ST/OD is the ratio between a stiffness of the cable and the outer dimension, W/ST is the ratio between a weight of the cable and the stiffness, CSR is the cross-sectional ratio, and where A, B and C are constant parameters which have been determined by the inventors (A=5000 N, B= 5000 g/(N·m$^4$) and C=-51.2 m$^{-1}$).

Moreover, according to advantageous embodiments of the invention, the layer of strength yarns is wrapped around the optical fiber module at a lay length comprised between 200 mm and 1000 mm, more preferably between 200 mm and 600 mm. In other embodiments of the invention, the layer of strength yarns comprises in-line arranged strength yarns.

According to the embodiments of the present invention, each of the at least two strength members is completely surrounded by the material of the outer sheath. In particular:

- the distance between any point on the surface of the strength member (namely, the external surface of the strength member) and an outer surface of the outer sheath is greater than or equal to 0.2 mm;
- the distance between any point on the surface of the strength member (namely, the external surface of the strength member) and any boundary of the inner cavity (corresponding to an inner surface of the outer sheath) is greater than or equal to 0.1 mm.

According to some embodiments of the invention, the drop cable comprises a pair of strength members at each of the opposite positions with respect to the inner cavity, the strength members of each pair being in a substantially vertical arrangement. Preferably, each strength member has a round cross-section with a diameter ranging between 0.6 mm and 1.2 mm.

According to other embodiments of the invention, the drop cable comprises one strength member at each of the opposite positions with respect to the inner cavity, the cross-section shape of the strength member being round or oval.

Preferably, the at least one strength member at each of the opposite positions with respect to the inner cavity has a cross-section area greater than or equal to a cross-section area of the optical fiber module.

Preferably, the optical fiber module and the strength elements layer (3) are loosely arranged inside the inner cavity.

Preferably, the outer dimension ranges from 4.0±0.2 mm to 7.0±0.2 mm, more preferably from 4.5±0.2 mm to 6.5±0.2 mm.

Preferably, the inner cavity has a round or elliptical cross-section shape.

Preferably, the outer sheath is made of a polymeric material chosen among the following ones: high-density polyethylene, polyurethane, polyvinyl chloride, polypropylene, halogen free flame-retardant composition.

Preferably, the strength elements layer comprises a mixture of water-swellable yarns and non-water-swellable yarns. According to exemplary embodiments, the strength yarns are aramid yarns.

The inventors have found that the performances of the optical fiber drop cables of the present invention make them suitable for multiple uses. This means that an optical fiber drop cable according to the present invention can be installed by any technique such as pulling, pushing or blowing (in a free or an already occupied duct), and that it can be deployed in multiple different environments, namely indoor or outdoor, in a duct, overhead, or directly buried, on a façade, or on any other kind of support, such as a pylon or the like.

## Brief description of the drawings

Further characteristics and advantages will become more apparent by reading the following detailed description of an embodiment given as an example with reference to the accompanying drawings, wherein:

- Figure 1 is a cross-sectional view of an optical fiber drop cable according to a first embodiment of the present invention;
- Figure 2 is a cross-sectional view of an optical fiber drop cable according to a second embodiment of the present invention; and
- Figure 3 is a cross-sectional view of an optical fiber drop cable according to a third embodiment of the present invention;
- Figure 4 is a first table listing eight specimens of the cable according to embodiments of the present invention and associated parameters;
- Figure 5 is a second table reporting other parameters associated with the specimens;
- Figure 6 is a third table reporting the outcome of performance tests;
- Figure 7 is a first plot displaying values of parameters associated with the considered specimens;
- Figure 8 is a second plot displaying values of parameters associated with the considered specimens;
- Figure 9 is a third plot displaying values of parameters associated with the considered specimens; and
- Figure 10 is a fourth plot displaying values of parameters associated with the considered specimens.

## Detailed description of preferred embodiments of the invention

In the present description and claims, unless otherwise specified, all the numbers and values should be intended as preceded by the term "about". Also, all ranges include any combination of the maximum and minimum points disclosed and include any intermediate ranges therein, which may or may not be specifically enumerated herein.

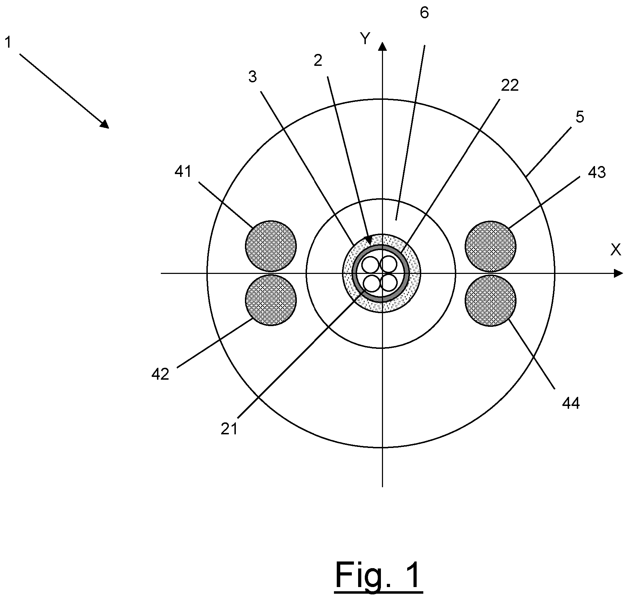

Figure 1 schematically shows a cross section of an optical fiber drop cable (also referred to simply as "drop cable") 1 according to a first embodiment of the present invention. Figure 1 also shows a reference coordinate system XY.

The drop cable 1 comprises an optical fiber module 2, a layer of strength elements 3 (also called "strength elements layer"), one or more strength members 41, 42, 43, 44 and an outer sheath 5. The strength elements layer 3 surrounds the optical fiber module 2. The outer sheath 5 forms an inner cavity 6 which houses the optical fiber module 2 and the strength elements layer 3. In particular, the outer sheath 5 has an inner surface (which corresponds to the surface or boundary delimiting the inner cavity 6) and an outer surface, which corresponds to the external surface of the drop cable 1.

According to the present invention, the outer sheath 5 of the drop cable 1 has an outer dimension OD corresponding to the outer diameter of the outer sheath and an inner dimension ID corresponding to a dimension of the inner cavity, as it will be described in greater detail herein after. The expression "outer diameter" refers to the diameter of the cross section of the smallest circle circumscribing the outer sheath. According to embodiments of the present invention, the ratio between the outer dimension and the inner dimension (OD/ID) is greater than or equal to 2. This advantageously allows to improve the performances of the drop cable, as it will be described herein after.

The optical fiber module 2 preferably comprises one or more optical fibers 21 surrounded by a buffering membrane 22 (either a buffer tube or a thin polymeric layer). Preferably, the optical fiber module 2 comprises a plurality of optical fibers, such as for instance from one to twelve optical fibers. Each optical fiber may be a single-mode optical fiber. The nominal diameter of the optical fiber is preferably equal to about 242 $\mu$m but can be smaller (e.g. 200 $\mu$m or 180 $\mu$m or even less).

The optical fibers are preferably tightly arranged inside the buffering membrane 22. The material of the buffering membrane 22 can be any suitable plastic material, including: polyvinyl chloride (PVC), a thermoplastic polyester elastomer such as the Hytrel® material manufactured by DuPont™, the ECCOH™ material manufactured by Avient, a fluoropolymer, nylon, an UV-cured acrylate resin. A halogen free flame retardant or a low smoke thermoplastic sheathing compound can also be used. The thickness of the buffering membrane 22 may be comprised between 50 $\mu$m and 200 $\mu$m; for instance, it may be equal to 100 $\mu$m. Optionally, in embodiments when more than four optical fibers are present, the interstices between the optical fibers in the optical fiber module 2 may be filled with a water blocking and mechanical buffering filling compound (also known as filling gel) compatible with the material of the buffering membrane; for instance, the filling compound provided by Unigel (400N Series) or Henkel (Teroson®) may be used. In another embodiment, the module can be dry (i.e. without any filling compound) and, depending on the required performance, water swellable yarns can be incorporated with the optical fibers before the buffering membrane is applied on them.

The outer diameter of the optical fiber module 2 depends on the fiber count. It is preferably comprised between 500 $\mu$m and 1300 $\mu$m. For instance, for an optical fiber module comprising only one 242 $\mu$m optical fiber, the outer diameter can be 900 $\mu$m, while for an optical fiber module comprising two 242 $\mu$m optical fibers, the outer diameter can be 700 $\mu$m.

For an optical fiber module comprising four 242 μm optical fibers, the outer diameter can be 800 μm. For an optical fiber module comprising twelve 200 μm optical fibers, the outer diameter can be 1100 μm.

The strength elements layer 3 surrounding the optical fiber module 2 is a layer of strength yarns around the optical fiber module 2. According to embodiments of the present invention, the strength elements layer 3 comprises a mixture of water-swellable yarns and non-water-swellable yarns. The yarns may be aramid yarns, glass yarns or high-strength polyethylene yarns such as Dyneema® yarns. For instance, the strength elements layer 3 may comprise up to nine 1610 dTex aramid yarns. Other aramid yarns may be used up to 14500 dTex. According to an exemplary embodiment, the strength elements layer 3 comprises three 1610 dTex water-swellable aramid yarns and six 1610 dTex non-water-swellable aramid yarns. The thickness of the strength elements layer 3 varies between 0.3 and 0.5 mm. Advantageously, such a strength elements layer 3 allows to prevent water penetration inside the cable.

According to advantageous embodiments of the present invention, the strength yarns 3 are wrapped around the optical fiber module 2 with a lay length comprised between 200 mm and 1000 mm, more preferably between 200 mm and 600 mm. Advantageously, wrapping the strength yarns with a lay length in the mentioned range allows:

- having a good cover-up of the optical fiber module, avoiding melting and sticking issues between the fiber module and the cable jacket during the manufacturing; and
- preventing any compressive effect on the optical fiber module when the cable is bent thus obtaining an optical cable exhibiting excellent bending performance.

In particular, the presence of the strength elements layer 3 allows preventing the optical fiber module from sticking on the outer sheath 5 during the cable jacketing process.

In other embodiments, the strength yarns 3 comprise in-line arranged strength yarns.

The optical fiber module 2 and the strength elements layer 3 surrounding the optical fiber module 2 are housed in the inner cavity 6 formed by the outer sheath 5. In particular, the optical fiber module 2 and the strength elements layer 3 surrounding the optical fiber module 2 are preferably loosely arranged inside the cavity 6. In other words, the inner dimension ID is larger than an outer diameter of the strength elements layer 3 (which is the diameter of the cross section of the smallest circle circumscribing the strength elements layer 3). According to embodiments of the drop cable of the present invention, the inner cavity 6 has a substantially circular cross shape. In this case, the inner dimension ID of the outer sheath 5 is the diameter of the cross section of the inner cavity 6. The diameter of the cross section of the cavity 6 may be comprised between 2.0 and 3.5 mm and preferably between 2.2 and 3.3 mm. According to an exemplary embodiment, the diameter of the cross-section of the inner cavity 6 is about 2.2 mm.

According to other embodiments, the shape of the cross section of the inner cavity 6 may be elliptic. According to these embodiments, within the Cartesian coordinate system shown in the drawings, the major axis of the elliptic cross-section lies substantially along the Y axis, while the minor axis lies substantially along the X axis. For instance, the major axis may be 2.3 mm long while the minor axis may be 2.1 mm long. In this case, when the inner cavity has an elliptic cross-section, the inner dimension ID of the outer sheath 5 is determined as the average value between the major axis and the minor axis of the inner cavity elliptic cross-section.

Selecting the elliptical shape may allow to achieve a minimum thickness around the strength members present inside the outer sheath, accommodate the size of the strength members inside the outer sheath and reduce as much as possible the inner cavity space with respect to the outer dimension of the cable.

The presence of the inner cavity 6 allows arranging an excess fiber length (EFL) inside the cable to countervail the cable elongation when, for instance in aerial installation, the cable itself must withstand heavy weather conditions (e.g. wind and/or ice loading).

The outer sheath 5 is a sheath of a polymeric material, for example chosen among the following materials: HDPE (High-Density Polyethylene), polyurethane, polyvinyl chloride (PVC), polypropylene, Halogen Free Flame Retardant (HFFR) compositions. The material is chosen such that the coefficient of friction (COF) of the cable in a conduit is preferably lower than 0.4, more preferably comprised between 0.3 and 0.4. The coefficient of friction (COF) of the cable in a conduit may be measured in accordance with French Standard XP C 93-850-3-25 (April 2022) entitled "Optical fiber cables - Part 3-25: detail specification - Outdoor distribution cables, aerial or subground" and published by the Association française de normalisation (AFNOR).

Preferably, the outer diameter OD of the outer sheath 5 ranges from from 4.0±0.2 mm to 7.0±0.2 mm, even more preferably from 4.5±0.2 mm to 6.5±0.2 mm. An exemplary value for the outer diameter OD of the outer sheath 5 is 5±0.2 mm.

Optionally, the outer sheath 5, on its external surface, comprises one or more longitudinal markings either comprising a color strip or an embossed element. They may be located at opposite symmetrical positions with respect to the longitudinal plane of the cable, for instance located along the Y axis at symmetric positions with respect to the X axis in the drop cable 1 of Figure 1.

In the drop cable 1 shown in Figure 1, the number of strength members is four. Preferably, each strength member 41, 42, 43, 44 is a GRP (Glass Reinforced Plastic) rod with a substantially circular cross-section. Alternatively, the strength members may be FRP (Fiber-Reinforced Polymer) rods or any combination of GRP and FRP rods. The diameter of the cross section of each strength member 4 may vary between 0.5 mm and 1.5 mm, preferably between 0.6 mm and 1.2 mm; for instance, the diameter of the cross section of each strength member 41, 42, 43, 44 may be equal to about 0.9 mm. According to advantageous embodiments, the strength members on each side of the inner cavity 6 have an overall cross-section area which is greater than or equal to a cross-section area of the optical fiber module. This allows to improve the crush protection.

According to variants, each strength member 41, 42. 43, 44 may be surrounded by a jacket of EAA (Ethylene Acrylic Acid) or another material, which allows easy handling and adhesion with the material of the outer sheath.

The strength members 41, 42, 43, 44 are arranged alongside the optical fiber module 2 and are substantially parallel to the optical fiber module 2. In particular, the longitudinal axis of the optical fiber module 2 and the longitudinal axes of the strength members 4 are substantially parallel and lie in parallel planes orthogonal to axis Y.

According to the exemplary embodiment of Figure 1, a first pair of strength members 41, 42 is arranged at one side of the optical fiber module 2 and a second pair of strength members 43, 44 is arranged at the other side of the optical fiber module 2 in an opposite position with respect to the inner cavity 6. The strength members 41, 42 of the first pair of strength members, as well as the strength members 43, 44 of the second pair of strength member are in a substantially vertical arrangement, namely they are arranged substantially one above the other. In particular, the strength members within each pair of strength members are substantially aligned along a vertical axis (i.e. an axis parallel to the Y axis).

According to the embodiments of the present invention, each strength member 41, 42, 43, 44 is completely embedded in the outer sheath 5. In particular, each strength member 41, 42, 43, 44 is completely surrounded by the material of the outer sheath 5. In particular, the distance between the external surface of the strength member 41, 42, 43, 44 and the outer surface of the outer sheath 5 is greater than or equal to 0.2 mm, preferably greater than or equal to 0.3 mm. Moreover, the distance between the external surface of the strength member 41, 42, 43, 44 and any boundary of the inner cavity 6 (namely, the inner surface of the outer sheath) is greater than or equal to 0.1 mm, preferably greater than or equal to 0.15 mm.

The presence of the outer sheath material all around the strength members allows to prevent any damages when the cable is subject to kinks, bends, impacts, cuts or when it is constrained by clamps or anchors. Any contact of the strength member with the optical fiber module is avoided, and consequently this allows avoiding any possible increase in the optical fiber attenuation due to this contact.

Moreover, it is to be noticed that, as it will be discussed herein after, the arrangement of the strength members in combination with the shape and dimension of the inner cavity guarantees a suitable protection against crushing. This protection against crushing is not only guaranteed in the horizontal direction (X-axis) but also in the vertical direction (Y-axis).

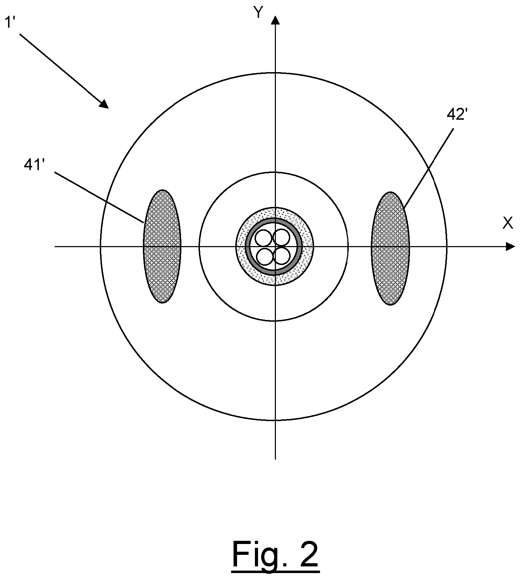

Figure 2 schematically shows a cross section of an optical fiber drop cable (also referred to simply as "drop cable") 1' according to a second embodiment of the present invention. The drop cable 1' is similar to the drop cable 1 described above according to the first embodiment of the invention. Indeed, the optical fiber module, the strength elements layer and the outer sheath are analogous to the corresponding components of drop cable 1. Hence, a detailed description of these components will not be repeated.

In the drop cable 1' according to the second embodiment of the present invention shown in Figure 2, the number of strength members is two. The strength members 41', 42' are arranged alongside the optical fiber module at opposite positions with respect to the inner cavity. They are substantially parallel to the optical fiber module and horizontally aligned with the optical fiber module. Preferably, each strength member 41', 42' is a GRP or FRP rod element having a cross-section with a substantially oval or rectangular shape. In particular, the cross-section of each strength member 41', 42' as shown in Figure 2 is elliptic. The major axis of the elliptic cross-section may be between 1.7 and 2.8 mm, for instance equal to about 1.9 mm. The minor axis of the elliptic cross-section may be between 0.4 and 1.0 mm, for instance equal to about 0.85 mm. Preferably, each strength member has a cross-section area which is greater than or equal to the cross-section area of the optical fiber module.

It is to be noticed that changing the shape of the strength member allows modifying the stiffness of the cable. For instance, using an oval strength member in place of two round strength members vertically aligned, as in the cable of Figure 1, would lead to a less stiff cable.

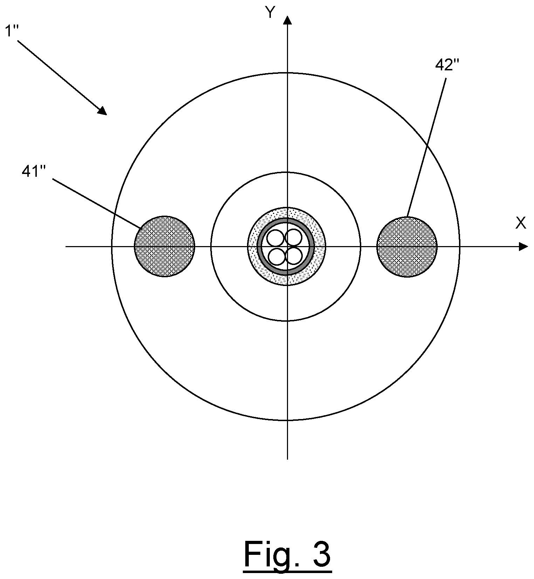

Figure 3 schematically shows a cross-section of an optical fiber drop cable (also referred to simply as "drop cable") 1" according to a third embodiment of the present invention. The drop cable 1" is similar to the drop cables 1, 1' described above according to the first and second embodiments of the invention. Indeed, the optical fiber module, the strength elements layer and the outer sheath are analogous to the corresponding components of drop cable 1. Hence, a detailed description of these components will not be repeated.

In the drop cable 1" according to the third embodiment of the present invention shown in Figure 2, the number of strength members is two. The strength members 41", 42" are arranged alongside the optical fiber module at opposite positions with respect to the inner cavity. They are substantially parallel to the optical fiber module and horizontally aligned with the optical fiber module. Preferably, each strength member 41", 42" is a GRP or FRP rod element having a cross-section with a substantially circular shape. The diameter of each strength member 41", 42" may vary between 0.5 mm and 1.5 mm, preferably between 0.6 mm and 1.2 mm; for instance it may be equal to about 1.1 mm. Also in this case, preferably, each strength member has a cross-section area which is greater than or equal to the cross-section area of the optical fiber module.

According to all the embodiments of the present invention as disclosed above, the drop cable has a weight per unit length comprised between 15 g/m and 50 g/m, and preferably between 20 g/m and 35 g/m.

Drop cables according to the embodiments disclosed herein above have been subject to a series of tests, which led the inventors to find improved designs allowing to obtain drop cables having improved performances.

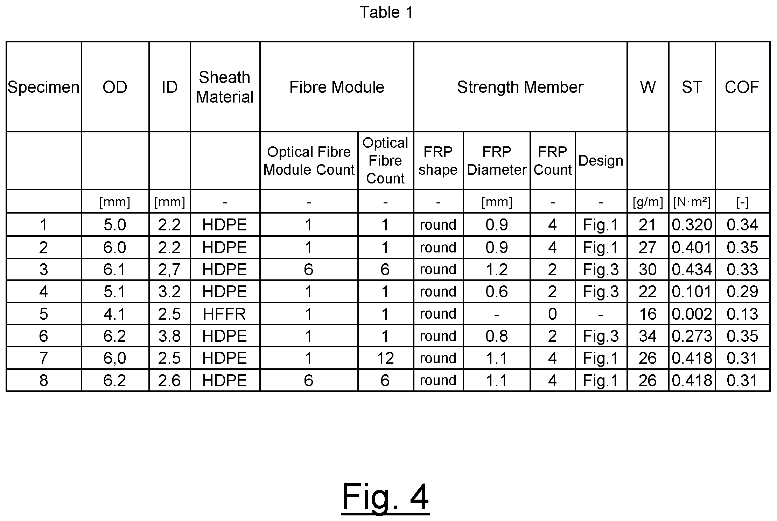

The tests have been performed by considering a number of exemplary drop cables, or specimens, that are listed in Table 1 shown in Figure 4. The number of specimens is eight. Table 1 contains data describing the components of each specimen. In Table 1, "OD" indicates the outer dimension, "ID" indicates the inner dimension, "W" indicates the weight for unit length, "ST" indicates the stiffness and "COF" indicates the coefficient of friction. The stiffness of each drop cable is measured according to test method E17B (cantilever bend) described in International Standard IEC 60794-1-21: Ed. 1.0 (2015-03) and published by the International Electrotechnical Commission (IEC). It is to be noticed that stiffness can be measured for two different orientations of the strength members in the cable (for instance, for the drop cable according to the first embodiment of this invention, a first configuration provides the first pair of strength members 41, 42 and the second pair of strength members 43, 44 vertically aligned along the Y-axis, and the second configuration provides the two pairs horizontally aligned along the X-axis as shown in Figure 2). In the present description, reference is made to a stiffness value corresponding to the maximum value which is obtained by measuring the stiffness in both configurations, such maximum value corresponding to the case where the strength members are oriented vertically during the measurement. The coefficient of friction COF is measured in accordance with French Standard XP C 93-850-3-25 (April 2022) already cited above.

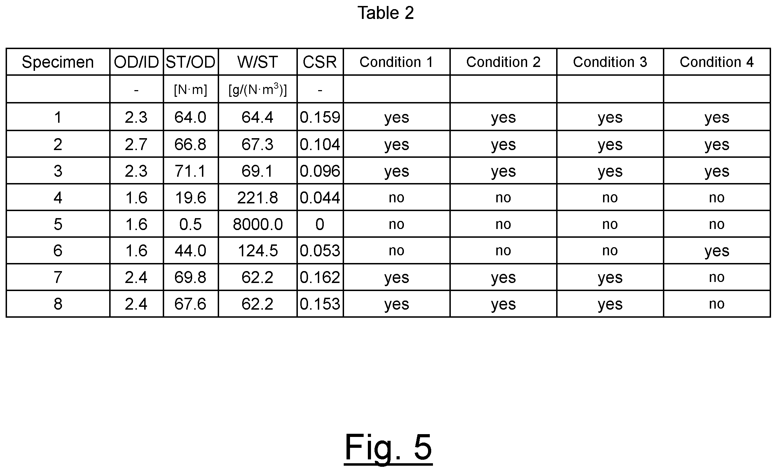

Table 2 shown in Figure 5 contains, for each specimen, the values of a number of parameters which have been identified by the inventors in order to define the cable designs. These parameters are:

-  the ratio OD/ID between the outer dimension OD and the inner dimension ID of the outer sheath;
-  the ratio ST/OD between the stiffness of the cable and the outer dimension OD, also indicated as "stiffness-over-dimension" or SD coefficient;
-  the ratio W/ST between the weight of the cable W and the stiffness ST, also indicated as "weight-over-stiffness" or WS coefficient; and
-  a cross-sectional ratio CSR, which is defined as $A_{sm}/(\pi/4 \cdot (OD^2 - ID^2))$, where $A_{sm}$ is the cross-sectional area of the strength members embedded into the outer sheath. For round strength members, $A_{sm}$ is defined by $A_{sm} = n \cdot \pi/4 \cdot D^2$, where n is the number of strength members, and D is the diameter of one strength member.

These particular parameters have been selected by the inventors in order to find a corelation between the outcome of the tests and some cable properties such as dimensions, stiffness and weight. For instance, with reference to the pushing/blowing properties during installation, the inventors found that beyond a certain pushing force, the drop cable deforms longitudinally into undulations generating strong frictional contact with the walls of the duct and therefore limiting its progression inside the duct. This applies when stiffness is too low, but also inversely: should the cable be too stiff, the frictional contact would limit the progression of the drop cable in the duct when passing the curvatures present along the duct itself. As for the weight of the drop cable, if its value is too high, the pushing force needed to push the cable will increase with the distance and the progression of the cable will be reduced, as evident when also considering the limits of the installation machines. On the other side, the weight cannot be lower than a certain value, which depends on the weight of the cable elements.

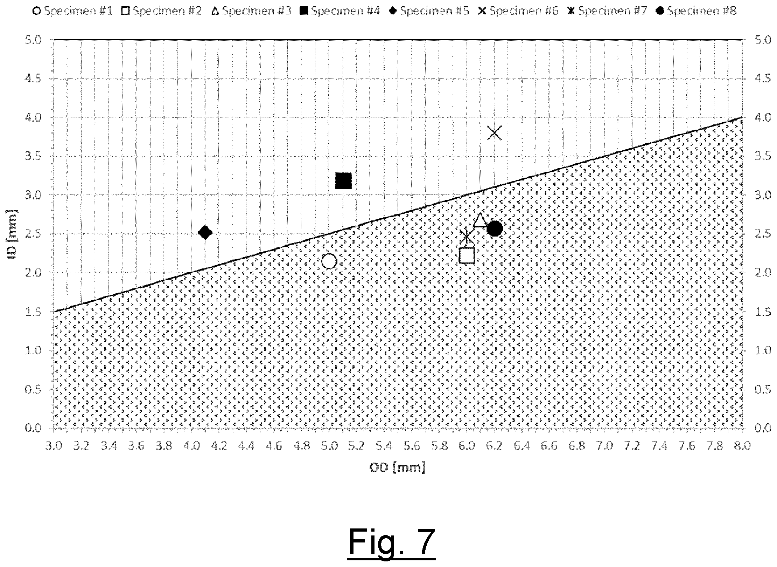

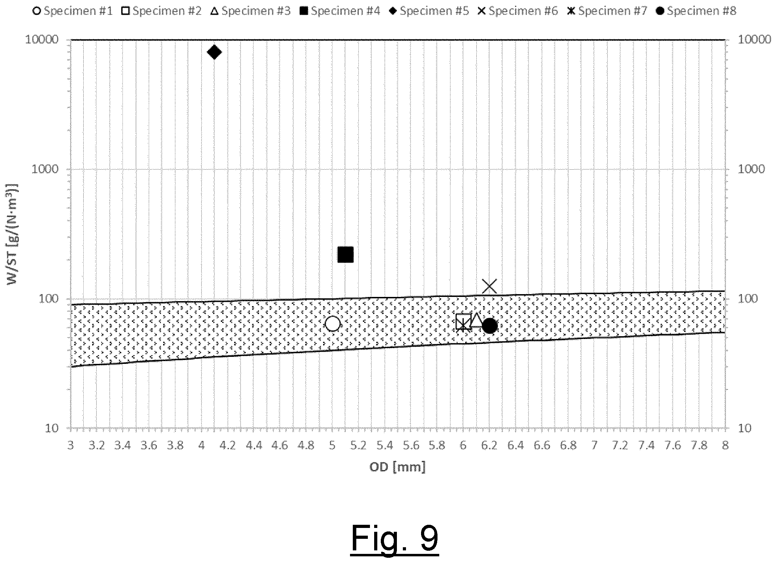

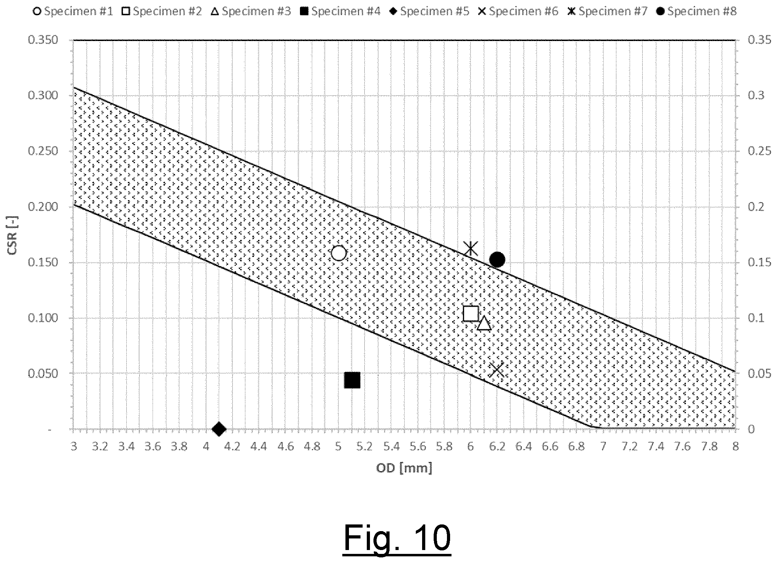

Figures 7, 8, 9 and 10 show, respectively, the values of the cable parameters defined above (namely, the ratio OD/ID, the SD coefficient, the WS coefficient and the cross-sectional ratio CSR as reported in Table 2) as a function of the outer dimension OD for the considered specimens.

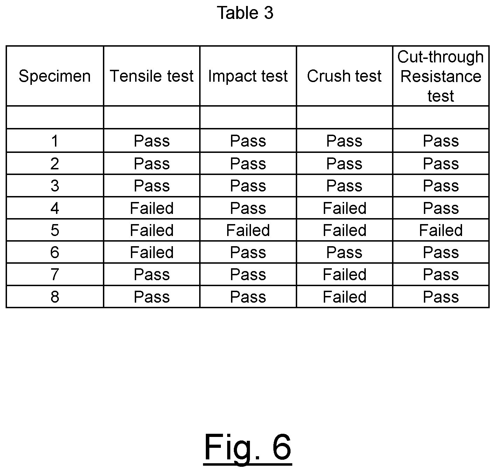

Table 3 shown in Figure 6 contains data indicating, for each specimen, the outcome of a number of tests, namely a tensile test, an impact test, a crush test and a cut-through resistance test. These tests have been selected by the inventors for identifying drop cables having optimal and further improved performances according to embodiments of the present invention. All these tests have been performed according to procedures defined in the French Standard XP C 93-850-3-25 (April 2022) already cited above.

By considering the outcome of the tests, as reported in Table 3, and the data plotted in Figures 7-10, the inventors found that optimal performances are achieved by drop cable designs wherein, first of all, the ratio between the outer dimension OD and the inner dimension ID of the outer sheath is greater than or equal to 2, so that:

$$OD/ID \geq 2 \,. \qquad\qquad [1]$$

This condition is represented as a straight line in Figure 7.

The cable designs meeting this condition, in particular, guarantee the tensile force which is required for over-head installations and the stiffness targeted for pushing and blowing techniques. In this respect, the considered designs are associated with a stiffness that is greater than $0.25\ \mathrm{N\cdot m^2}$, which guarantees improved performances when the drop cable is pushed or blown. Moreover, the same designs are associated with a coefficient of friction COF lower than 0.4.

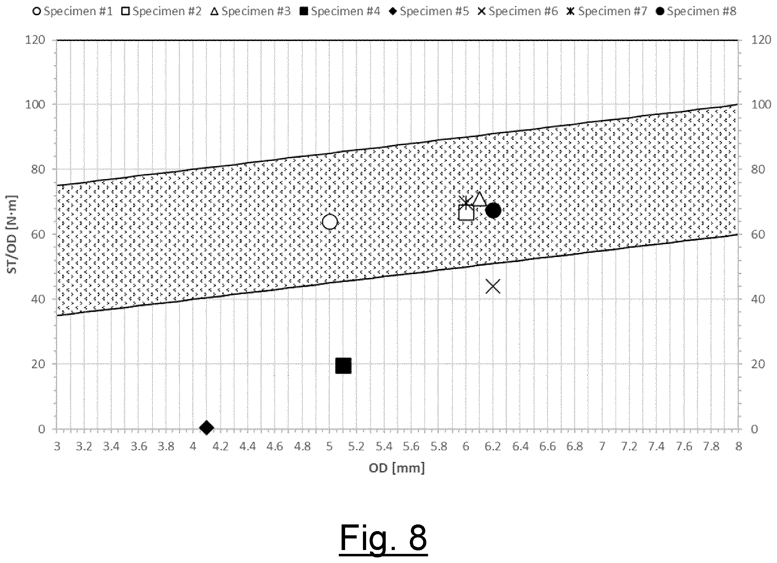

Moreover, in the light of the analysis above, considering the data represented in Figures 8, 9 and 10, the inventors found that, according to embodiments of the present invention, drop cables exhibiting further improved performances (namely, drop cables passing all the tests selected by the inventors) meet also the further following conditions:

$$20\ \mathrm{N\cdot m} \leq ST/OD - A\cdot OD \leq 60\ \mathrm{N\cdot m}; \qquad\qquad [2]$$

$$15\ \mathrm{g/(N\cdot m^3)} \leq W/ST - B\cdot OD \leq 75\ \mathrm{g/(N\cdot m^3)}; \qquad\qquad [3]$$

$$0.3562 \leq CSR - C\cdot OD \leq 0.4612, \qquad\qquad [4]$$

where:

- OD is the already defined outer dimension (expressed in meters, m);
- ID is the inner dimension (expressed in meters, m);
- ST is the stiffness of the cable (expressed in Newton square meters, $\mathrm{N\cdot m^2}$);
- W is the weight per meter of the cable (expressed in grams per meter, g/m);
- CSR is the cross-sectional ratio;
- A is a first constant equal to 5000 N;
- B is a second constant equal to $5000\ \mathrm{g/(N\cdot m^4)}$; and
- C is a third constant equal to $-51.2\ \mathrm{m^{-1}}$.

In particular, the shaded area in each of Figures 8, 9 and 10 represents the area comprising values of parameters fulfilling, respectively, condition [2], condition [3] and condition [4].

As apparent, the conditions above allow to define further improved cable designs according to advantageous embodiments of the present invention, as the exemplary drop cables meeting conditions [1]-[4] passed all the considered tests. In particular, conditions [2] and [3] have been identified by the inventors to combine the stiffness, weight per unit length and outer dimension to find a suitable balance between the different requirements discussed above. Condition [4] allows relating the cross-section of the strength member over the sheath cross-sectional area to guarantee that the crush performance is met for the considered cable.

Specimens 1, 2 and 3, hence, correspond to three exemplary drop cables having improved performances, which will be described in more detail herein after.

The first exemplary drop cable comprises the following components:

| | |
|---|---|
| Optical fiber module | four 242 $\mu$m G.657.A2 optical fibers tighly arranged in buffer tube (800 $\mu$m diameter) |
| Outer sheath | OD = $5.0\pm0.2$ mm<br>ID = 2.2 mm |
| Outer sheath material | HDPE |
| Strength members | four FRP rods (0.9 mm diameter) arranged as shown in Figure 1 |

As already anticipated above, the drop cable stiffness is greater than $0.25\ \mathrm{N\cdot m^2}$, in particular equal to about $0.32\ \mathrm{N\cdot m^2}$. The coefficient of friction COF is lower than 0.4, in particular equal to about 0.34. The weight is equal to about 21 g/m.

The parameters of this drop cable meet the conditions [1]-[4] above. Considering the tolerances of the OD ($\pm0.2$ mm), the parameters in conditions [1]-[4] are as follows:

| OD [mm] | ID [mm] | OD/ID [-] | ST/OD [N·m] | W/ST [g/(N·m$^3$)] | CSR [-] |
|---|---|---|---|---|---|
| 5.0 | 2.2 | 2.3 | 64.0 | 64.4 | 0.159 |
| 5.2 | 2.2 | 2.4 | 61.5 | 64.9 | 0.145 |
| 4.8 | 2.2 | 2.2 | 66.7 | 63.9 | 0.176 |

As already discussed above, this exemplary drop cable passed the tensile test, the impact test, the crush test and the cut-through resistance test. More specifically, it has been shown that this exemplary cable is compliant with French Standard XP C 93-850-3-25 (April 2022) already cited above and suitable for multi-use applications. Some conclusions drawn from the outcome of the tests, are briefly summarized herein after. The maximal admissible tensile force is 100 daN, which is relevant for aerial, duct and direct-buried installation. The optical fiber elongation is lower than 0.3% while the drop cable elongation is lower than 0.5%. The maximal admissible crush force is 500 daN for reversibility in attenuation and a maximal cutting force of 300N, which are relevant for buried installation. The cut-through resistance is 300 N minimum. Also blowing and pushing tests have been performed, which are relevant for duct installation. The tests showed that the cable can be blown in one shot up to 2000 m at a speed of 60 m/min and pushed with a machine up to 400m. For manual duct installation, the cable can be pushed by hand in an already occupied duct up to 80 m when considering a 40 mm diameter corrugated duct already occupied with a cable having an outer dimension equal to about 6.2 mm.

Finally, advantageously, the strength elements layer prevents any water penetration inside the cable over a length of nearly 3 m (as confirmed per test method F5B published in International Standard IEC 60794-1-22: Ed. 2.0 (2017-10) published by the International Electrotechnical Commission (IEC)).

The exemplary drop cable is hence suitable for aerial installation, as well as for duct installation, direct-buried installation and façade installation.

The second exemplary drop cable comprises the following components:

| Optical fiber module | one 242 μm G.657.A2 optical fiber tighly arranged in buffer tube (900 μm diameter) |
|---|---|
| Outer sheath | OD = 6.0±0.2 mm<br>ID = 2.2 mm |
| Outer sheath material | HDPE |
| Strength members | four FRP rods (0.9 mm diameter) arranged as shown in Figure 1 |

As already anticipated above, this exemplary drop cable shows a stiffness that is greater than 0.25 N·m$^2$, in particular equal to about 0.401 N·m$^2$. The coefficient of friction is lower than 0.4, in particular equal to about 0.35. The weight is equal to about 27 g/m.

The parameters of this drop cable meet the conditions [1]-[4] above. Considering the tolerances of the OD (±0.2mm), the parameters in conditions [1]-[4] are as follows:

| OD [mm] | ID [mm] | OD/ID [-] | ST/OD [N·m] | W/ST [g/(N·m$^3$)] | CSR [-] |
|---|---|---|---|---|---|
| 6.0 | 2.2 | 2.7 | 66.8 | 67.3 | 0.104 |
| 6.2 | 2.2 | 2.8 | 64.7 | 67.8 | 0.097 |
| 5.8 | 2.2 | 2.6 | 69.1 | 66.9 | 0.113 |

The third exemplary drop cable comprises the following components:

| Optical fiber module | six 242μm G.657.A2 optical fiber tighly arranged in buffer tube (900 μm diameter) |
|---|---|
| Outer sheath | OD = 6.1±0.2 mm<br>ID = 2.7 mm |
| Outer sheath material | HDPE |
| Strength members | two FRP rods (1.2 mm diameter) arranged as shown in Figure 3 |

As already anticipated above, this exemplary drop cable has a stiffness greater than 0.25 N·m$^2$, in particular

equal to about 0.434 N·m². The coefficient of friction is lower than 0.4, in particular equal to about 0.33. The weight is equal to about 30 g/m.

The parameters of this drop cable meet the conditions [1]-[4] above. Considering the tolerances of the OD (±0.2mm), the parameters in conditions [1]-[4] are as follows:

| OD [mm] | ID [mm] | OD/ID [-] | ST/OD [N·m] | W/ST [g/(N·m³)] | CSR [-] |
|---------|---------|-----------|-------------|------------------|---------|
| 6.1 | 2.7 | 2.3 | 71.1 | 69.1 | 0.096 |
| 6.3 | 2.7 | 2.4 | 68.9 | 69.5 | 0.089 |
| 5.9 | 2.7 | 2.2 | 73.6 | 68.7 | 0.104 |

Advantageously, as proven by the cited measurements, drop cables which are designed as described above are multi-use as they can be installed using different techniques such as pulling, pushing, blowing and deployed in multiple different environments. Each single design meets the requirements of different deployments and installation techniques. It also simplifies the maintenance and storage of the cable for the different deployments.

In particular, the strength elements layer and strength members provide the required tensile crush resistance and the required stiffness to the drop cable during installation and in operative conditions. Indeed, the strength members described above, having, *inter alia,* an overall cross-section size which is comparable to the cross-section size of the optical fiber module, allows to protect the optical fiber module when, for instance, the cable is used in an overhead installation and cable clamps are used to fix the cable. In operative conditions of an overhead installation, the strength members allow providing the required tensile strength to the cable to guarantee its integrity when loads are applied, such as those due to adverse weather conditions, and protect the transmission unit when the cable is crushed or impacted by external elements. Moreover, the strength elements layer and strength members allow providing the cable with the required stiffness when it is blown or pushed in a duct.

Advantageously, it is to be noticed that the drop cable as disclosed above is completely dielectric. This means that there is no need to use protection components when the drop cable is put underground, for instance in a direct buried installation.

Finally, it is to be noticed that the optical fibers of the optical fiber module are easily accessible without any specific opening tool. Indeed, the outer sheath (with or without notches), as well as the strength members and the strength elements layer, may be conveniently cut, by using a tube cutter or similar, to expose the optical fiber module. The optical fibers are then easily accessible by removing the buffer tube around them. This may be done by cutting the buffer tube with a stripper and releasing the buffer tube by sliding it over the fibers(s).

**Claims**

1. A drop cable (1; 1'; 1") comprising:

   - an optical fiber module (2) comprising one or more optical fibers (21) surrounded by a buffering membrane (22);
   - a strength elements layer (3) surrounding the optical fiber module (2), said strength elements layer (3) comprising strength yarns surrounding the optical fiber module (2);
   - an outer sheath (5) forming an inner cavity (6) in which said optical fiber module (2) and strength elements layer (3) are arranged; and
   - at least two strength members (41, 42, 43, 44; 41', 42') totally embedded in the outer sheath (5) at opposite positions with respect to said inner cavity (6).

2. The drop cable (1; 1'; 1") according to claim 1, wherein the ratio between the outer dimension (OD) of the drop cable (1; 1'; 1") and the inner dimension (ID) of the outer sheath (5) is greater than or equal to two.

3. The drop cable (1; 1'; 1") according to claim 2, wherein the drop cable meets the following conditions:

$$20\ \text{N·m} \leq \text{ST/OD - A·OD} \leq 60\ \text{N·m};$$

$$15\ \text{g/(N·m}^3) \leq \text{W/ST - B·OD} \leq 75\ \text{g/(N·m}^3);\ \text{and}$$

$$0.3562 \leq CSR - C\cdot OD \leq 0.4612,$$

where OD is said outer dimension, ID is said inner dimension, ST/OD is a ratio between a stiffness of the cable and the outer dimension, W/ST is a ratio between a weight of the cable and the stiffness, CSR is a cross-sectional ratio defined as $A_{sm}/(\pi/4\cdot(OD^2-ID^2))$ where $A_{sm}$ is a cross-sectional area of the strength members, and where A=5000 N, B= 5000 $g/(N\cdot m^4)$ and C=-51.2 $m^{-1}$.

4. The drop cable (1; 1'; 1") according to any of the preceding claims, wherein said strength elements layer (3) comprises strength yarns wrapped around the optical fiber module (2) at a lay length comprised between 200 mm and 1000 mm.

5. The drop cable (1; 1'; 1") according to any of the preceding claims, wherein the distance between an external surface of each strength member (41, 42, 43, 44) and an outer surface of the outer sheath (5) is greater than or equal to 0.2 mm and the distance between the external surface of each strength member (41, 42, 43, 44) and an inner surface of the outer sheath (5) is greater than or equal to 0.1 mm.

6. The drop cable (1) according to any of the preceding claims, wherein it comprises a pair of strength members (41, 42, 43, 44) at each of said opposite positions with respect to said inner cavity (6), the strength members of each pair being in a substantially vertical arrangement.

7. The drop cable (1) according to claim 6, wherein each strength member has a round cross-section with a diameter ranging between 0.6 mm and 1.2 mm.

8. The drop cable (1'; 1") according to any of claims 1-5, wherein it comprises one strength member (41', 42'; 41", 42") at each of said opposite positions with respect to said inner cavity (6), the cross-section shape of said strength member being round or oval.

9. The drop cable (1; 1'; 1") according to any of the preceding claims, wherein the at least one strength member (41, 42, 43, 44; 41', 42'; 41", 42") at each of said opposite positions with respect to said inner cavity (6) has a cross-section area greater than or equal to a cross-section area of said optical fiber module (2).

10. The drop cable (1; 1'; 1") according to any of the preceding claims, wherein said optical fiber module (2) and said strength elements layer (3) are loosely arranged inside the inner cavity (6).

11. The drop cable (1; 1'; 1") according to any of the preceding claims, wherein said outer dimension (OD) ranges from 4.0 $\pm$0.2 mm to 7.0$\pm$0.2 mm.

12. The drop cable (1; 1'; 1") according to any of the preceding claims, wherein the inner cavity (6) has a round or elliptical cross-section shape.

13. The drop cable (1; 1'; 1") according to any of the preceding claims, wherein said outer sheath (5) is made of a polymeric material chosen among the following materials: high-density polyethylene, polyurethane, polyvinyl chloride, polypropylene, halogen free flame-retardant composition.

14. The drop cable (1; 1'; 1") according to any of the preceding claims, wherein said strength elements layer (3) comprises a mixture of water-swellable yarns and non-water-swellable yarns.

15. The drop cable (1; 1'; 1") according to any of the preceding claims, wherein said strength yarns are aramid yarns.

Fig. 1

EP 4 660 679 A1

Fig. 2

EP 4 660 679 A1

Fig. 3

Table 1

| Specimen | OD [mm] | ID [mm] | Sheath Material | Fibre Module | | Strength Member | | | | W [g/m] | ST [N·m²] | COF [-] |
|---|---|---|---|---|---|---|---|---|---|---|---|---|
| | | | | Optical Fibre Module Count | Optical Fibre Count | FRP shape | FRP Diameter [mm] | FRP Count | Design | | | |
| 1 | 5.0 | 2.2 | HDPE | 1 | 1 | round | 0.9 | 4 | Fig.1 | 21 | 0.320 | 0.34 |
| 2 | 6.0 | 2.2 | HDPE | 1 | 1 | round | 0.9 | 4 | Fig.1 | 27 | 0.401 | 0.35 |
| 3 | 6.1 | 2,7 | HDPE | 6 | 6 | round | 1.2 | 2 | Fig.3 | 30 | 0.434 | 0.33 |
| 4 | 5.1 | 3.2 | HDPE | 1 | 1 | round | 0.6 | 2 | Fig.3 | 22 | 0.101 | 0.29 |
| 5 | 4.1 | 2.5 | HFFR | 1 | 1 | round | - | 0 | - | 16 | 0.002 | 0.13 |
| 6 | 6.2 | 3.8 | HDPE | 1 | 1 | round | 0.8 | 2 | Fig.3 | 34 | 0.273 | 0.35 |
| 7 | 6,0 | 2.5 | HDPE | 1 | 12 | round | 1.1 | 4 | Fig.1 | 26 | 0.418 | 0.31 |
| 8 | 6.2 | 2.6 | HDPE | 6 | 6 | round | 1.1 | 4 | Fig.1 | 26 | 0.418 | 0.31 |

Fig. 4

Table 2

| Specimen | OD/ID | ST/OD | W/ST | CSR | Condition 1 | Condition 2 | Condition 3 | Condition 4 |
|---|---|---|---|---|---|---|---|---|
| | - | [N·m] | [g/(N·m$^3$)] | - | | | | |
| 1 | 2.3 | 64.0 | 64.4 | 0.159 | yes | yes | yes | yes |
| 2 | 2.7 | 66.8 | 67.3 | 0.104 | yes | yes | yes | yes |
| 3 | 2.3 | 71.1 | 69.1 | 0.096 | yes | yes | yes | yes |
| 4 | 1.6 | 19.6 | 221.8 | 0.044 | no | no | no | no |
| 5 | 1.6 | 0.5 | 8000.0 | 0 | no | no | no | no |
| 6 | 1.6 | 44.0 | 124.5 | 0.053 | no | no | no | yes |
| 7 | 2.4 | 69.8 | 62.2 | 0.162 | yes | yes | yes | no |
| 8 | 2.4 | 67.6 | 62.2 | 0.153 | yes | yes | yes | no |

Fig. 5

Table 3

| Specimen | Tensile test | Impact test | Crush test | Cut-through Resistance test |
|---|---|---|---|---|
| | | | | |
| 1 | Pass | Pass | Pass | Pass |
| 2 | Pass | Pass | Pass | Pass |
| 3 | Pass | Pass | Pass | Pass |
| 4 | Failed | Pass | Failed | Pass |
| 5 | Failed | Failed | Failed | Failed |
| 6 | Failed | Pass | Pass | Pass |
| 7 | Pass | Pass | Failed | Pass |
| 8 | Pass | Pass | Failed | Pass |

Fig. 6

EP 4 660 679 A1

○ Specimen #1  ☐ Specimen #2  △ Specimen #3  ■ Specimen #4  ◆ Specimen #5  ✕ Specimen #6  ✖ Specimen #7  ● Specimen #8

Fig. 7

Fig. 8

Fig. 9

O Specimen #1  □ Specimen #2  △ Specimen #3  ■ Specimen #4  ◆ Specimen #5  ✕ Specimen #6  ✱ Specimen #7  ● Specimen #8

Fig. 10

EP 4 660 679 A1

Europäisches
Patentamt

European
Patent Office

Office européen
des brevets

# EUROPEAN SEARCH REPORT

Application Number

EP 25 17 9722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/245740 A1 (WEIMANN PETER A [US]) 1 October 2009 (2009-10-01) | 1-5,7-15 | INV. G02B6/44 |
| Y | * paragraphs [0029] - [0039] * * figure 3 * | 6 | |
| X | US 2007/098343 A1 (MILLER ALLEN M [US] ET AL) 3 May 2007 (2007-05-03) * paragraphs [0024] - [0032] * * figure 2 * | 1,8,12, 15 | |
| X | US 7 391 944 B2 (DRAKA COMTEQ BV [NL]) 24 June 2008 (2008-06-24) * column 2, line 37 - column 3, line 12 * * column 4, lines 29-40 * * figures 2,8 * | 1,8,12 | |
| A | US 2006/165355 A1 (GREENWOOD JODY L [US] ET AL) 27 July 2006 (2006-07-27) * paragraph [0067] * * figures 16,17 * | 1-15 | |
| Y,D | US 11 789 228 B2 (CORNING RES & DEV CORP [US]) 17 October 2023 (2023-10-17) * figures 6,7 * | 6 | **TECHNICAL FIELDS SEARCHED (IPC)** G02B |
| X | US 2005/213900 A1 (RHYNE TODD R [US] ET AL) 29 September 2005 (2005-09-29) | 1,8,12, 13 | |
| A | * paragraphs [0006], [0026], [0052] * * figure 14 * | 2-7, 9-11,14, 15 | |

-/--

The present search report has been drawn up for all claims

| Place of search | Date of completion of the search | Examiner |
|---|---|---|
| Berlin | 18 September 2025 | Moroz, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 17 9722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Sunpure Technologies Pvt. Ltd.: "Coated Glass Fiber \| Electric Cable \| www.sunpuretechno.com \|", , 1 January 2024 (2024-01-01), pages 1-3, XP093316115, Retrieved from the Internet: URL:https://www.sunpuretechno.com/coated-glass-fiber.php * page 1 - page 3 *  ----- | | |

|  |  |
|---|---|
|  | **TECHNICAL FIELDS SEARCHED (IPC)** |

The present search report has been drawn up for all claims

| Place of search | Date of completion of the search | Examiner |
|---|---|---|
| Berlin | 18 September 2025 | Moroz, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 17 9722

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2025

| Patent document cited in search report | | | Publication date | Patent family member(s) | | Publication date |
|---|---|---|---|---|---|---|
| US 2009245740 | A1 | | 01-10-2009 | US | 2008273845 A1 | 06-11-2008 |
| | | | | US | 2009245740 A1 | 01-10-2009 |
| US 2007098343 | A1 | | 03-05-2007 | US | 2007098343 A1 | 03-05-2007 |
| | | | | US | 2009034923 A1 | 05-02-2009 |
| | | | | WO | 2007053371 A1 | 10-05-2007 |
| US 7391944 | B2 | | 24-06-2008 | CN | 1967304 A | 23-05-2007 |
| | | | | US | 2007047884 A1 | 01-03-2007 |
| US 2006165355 | A1 | | 27-07-2006 | AU | 2006337663 A1 | 16-08-2007 |
| | | | | CA | 2642016 A1 | 16-08-2007 |
| | | | | CN | 101401018 A | 01-04-2009 |
| | | | | EP | 1982223 A1 | 22-10-2008 |
| | | | | ES | 2614633 T3 | 01-06-2017 |
| | | | | JP | 5410097 B2 | 05-02-2014 |
| | | | | JP | 2009526266 A | 16-07-2009 |
| | | | | US | 2006165355 A1 | 27-07-2006 |
| | | | | WO | 2007092046 A1 | 16-08-2007 |
| US 11789228 | B2 | | 17-10-2023 | EP | 3966609 A1 | 16-03-2022 |
| | | | | US | 2022057593 A1 | 24-02-2022 |
| | | | | US | 2024012218 A1 | 11-01-2024 |
| | | | | WO | 2020227334 A1 | 12-11-2020 |
| US 2005213900 | A1 | | 29-09-2005 | US | 2005213900 A1 | 29-09-2005 |
| | | | | WO | 2006108031 A1 | 12-10-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8355613 B2

- US 11789228 B2

**Non-patent literature cited in the description**

- Optical fiber cables - Part 3-25: detail specification. *French Standard XP C 93-850-3-25*, April 2022
- International Standard IEC 60794-1-21. International Electrotechnical Commission (IEC), March 2015

- *French Standard XP C 93-850-3-25*, April 2022
- F5B. International Standard IEC 60794-1-22. International Electrotechnical Commission (IEC), October 2017